# EUROPEAN PATENT APPLICATION

(11) **EP 2 251 215 A2**
(43) Date of publication of application: **17.11.2010**
(21) Application number: 10158508.1
(22) Date of filing: 30.03.2010
(51) Int. Cl.: B60C 11/16

(54) **Extendable/retractable studs for a tire**

(30) Priority: 30.04.2009 US 432899
(71) Applicant: The Goodyear Tire & Rubber Company, Akron, OH 44316-0001 (US)
(72) Inventor: Cuny, Andre, B-6720, Habay-la-Neuve (BE); Collette, Jean Joseph, B-6700, Arlon (BE); Severens, Frank, B-6700, Frassem-Arlon (BE)
(74) Representative: Kutsch, Bernd

(57) **Abstract**

A tire comprises a tread (34) having a radially outer tread surface (35) and a plurality of radially extending recesses, and an anti-slip structure (100) disposed in at least one of the radially extending recesses. The anti-slip structure (100) comprises a housing (110) with a displacement restricting element and a channel and a stud portion (130) comprising a shaft (132) and a displacement restricting element (134). The shaft (132) is slidingly disposed within the channel such that a radially outer tip (136) or end of the shaft (132) may selectably extend radially outward from the housing (110) and from the radially outer tread surface (35). The radially outer tip (136) or end extends from the housing (110) and from the radially outer tread surface (35) when a predetermined air pressure is introduced into the radially extending recess thereby forcing the displacement restricting element (114) of the stud portion (130) radially outward.

## Description

### Field of the Invention

The present invention relates generally to studs for a tire and, more particularly, to a winter tire comprising studs.

### Background of the Invention

Since the evolution of the pneumatic tire, great effort has been dedicated in the search for means to improve the traction of the driving wheels of all manner of vehicles upon the surface and under the conditions which they must operate. Water, mud, and snow are three of the most difficult conditions to address with a modern vehicle tire. Each of these conditions requires a specific tire tread suited either to "channelize" the water away from the tire or grip the soft or slippery surface and either bring more material under the tread area or compact the material to provide a suitably stable driving surface. These conditions however, pale by comparison with the problems encountered when operating a wheeled vehicle on an ice covered surface.

No amount of tread, ribs, bars, and/or other such means are effective upon a surface of solid ice. While time-honored detachable tire chains or cleats provide a measure of traction under these conditions, their use has never been popular due to the difficulty of installation/removal and the bone-shaking ride which they impart to a vehicle employing them.

In an attempt to solve these problems, the conventional "studded tire," which comprises a tread area which includes a number of hard stud-like projections which extend a short distance beyond the face of the tread to slightly penetrate the surface of the ice and thereby provide a limited mount of traction between tire and iced roadway, was developed. While it appeared that the studded tire would be the definitive solution to the operation of a vehicle on an ice covered surface, such was not the case. Soon after the introduction of studded tires, street and highway officials began to detect rapid deterioration of street and roadway surfaces and called for legislation to restrict or ban their use. Today, in most states and municipalities, the use of the studded tire is controlled by law, ordinance, or regulation requiring that such tires be used only during certain winter months and that such tires be removed from service during the warmer months. Further, some states have enacted legislation which prohibits the use of such tires at any time and have thus deprived motorists of the safety and convenience advantages of such tires.

Another factor which has to some extent lessened the popularity of the studded tire is the fact that the protruding stud reduces, to a certain degree, the ability of the tire to grip a dry roadway with a consequent diminution of braking action. Also, the rotation of the studded tire upon a dry roadway causes an undesirable noise and vibration inside the vehicle. Further, the requirement for removal of studded tires during the warmer months and their re-installation for the winter requires either a second set of wheels for each vehicle or the semi-annual removal and replacement of the tires upon the same wheels with the consequent potential for damage to the "bead" or air sealing area of the tire. Of lesser importance, but still a factor affecting their popularity, is the requirement for storage space for the second set of tires when they are out-of-service.

In the more temperate areas, the requirement for ice studs is virtually non-existent or may be limited to only a few days a year and quite possibly only for a portion of those days.

In order to accommodate the differing requirements of various quickly changing geographical and climatic regions, one conventional tire provides a plurality of retractable traction enhancing elements. This conventional tire has two substantially concentric casings which are selectably inflatable or deflatable to cause the extension or retraction of stud-like anti-skid projections.

Another conventional tire has stud-like projections which may be forced through the tread area of the tire by differential air pressure between the interior of the casing and hoses which pass about the inner periphery of the casing and pass under stud-like projections. Still another conventional tire employs a similar differential air pressure system for extending and retracting studs through the tread area of the tire and further provides an internal reservoir for high pressure actuating air within the casing and a specialized valve for filling the reservoir and extending or retracting the studs.

Yet another conventional tire employs a multi-chambered casing which allows the pneumatic outward flexure of a centrally situated stud-bearing band about the periphery of the tire at the center of the tread band into a road contacting position. Still another conventional tire provides "tire pressure dependent" traction enhancing studs for use on ice covered roadways. This conventional tire has an operator or driver selectable "on-demand" feature for engaging and disengaging traction enhancing studs.

While these conventional tires may be functional, none have provided widespread availability due to manufacturing and cost constraints. Thus, these conventional tires have not been adopted by the tire industry. A tire that may be employed year-round without causing unnecessary wear to the roadway, yet be instantly available in a studded configuration when required, would be desirable.

### Summary of Invention

The invention relates to a tire according to claim 1.

Dependent claims refer to preferred embodiments of the invention.

A tire in accordance with a preferred aspect of the present invention includes a carcass, a tread band having a radially outer tread surface and a plurality of radially extending recesses, and an anti-slip structure disposed in one of the radially extending recesses. The structure includes a preferably cylindrical housing with a preferably cylindrical flange and a preferably central channel and a stud portion with a shaft and a flange. The shaft is slidingly disposed within the central channel such that a radially outer tip of the shaft may selectably extend radially outward from the housing and from the radially outer tread surface in order to enhance traction for the tire. The radially outer tip extends from the housing and from the radially outer tread surface when a predetermined air pressure is introduced into the radially extending recess thereby forcing the flange of the stud portion radially outward to abut the flange of the housing.

In accordance with another preferred aspect of the present invention, the housing of the structure further includes a radially inner surface, an opposite radially outer surface, and a biasing element extending radially inward from the radially inner surface. The biasing element maintains the radially outer tip of the stud portion in an unextended position when air pressure in the radially extending recess is less than the predetermined air pressure.

In accordance with still another aspect preferred of the present invention, the predetermined air pressure is introduced into the radially extending recess by an axially or substantially axially extending channel.

In accordance with yet another preferred aspect of the present invention, the axially extending channel interconnects a radially innermost portion of the radially extending recess and an axially outer side portion of the tread band.

In accordance with still another preferred aspect of the present invention, the housing of the structure further includes a radially inner surface, an opposite radially outer surface, and a biasing element extending radially inward from the radially inner surface. The biasing element compresses into a recess at the radially inner surface when the predetermined air pressure is present in the radially extending recess.

In accordance with yet another preferred aspect of the present invention, the tire is a pneumatic tire and the predetermined air pressure is supplied by an inflation pressure of the pneumatic tire.

In accordance with still another preferred aspect of the present invention, the radially outer tip of the stud portion is flush with an outer surface of the housing and the radially outer tread surface when air pressure in the radially extending recess is less than the predetermined air pressure.

In accordance with yet another preferred aspect of the present invention, the plurality of radially extending recesses each have a shoulder portion for limiting radially outer movement of the flange of the housing.

In accordance with still another preferred aspect of the present invention, the flange of the housing limits radially outer movement of the flange of the stud portion.

In accordance with yet another preferred aspect of the present invention, a sealing element seals the predetermined air pressure within the radially extending recess.

### Definitions

The following definitions are controlling for the disclosed invention.

"Axial" and "axially" mean lines or directions that are parallel to the axis of rotation of the tire; synonymous with "lateral" and "laterally".

"Carcass" means the tire structure apart from the belt structure, tread, undertread, and sidewall rubber over the plies, but including the beads.

"Circumferential" means lines or directions extending along the perimeter of the surface of the annular tire parallel to the equatorial plane (EP) and perpendicular to the axial direction.

"Equatorial plane (EP)" means the plane perpendicular to the tire's axis of rotation and passing through the center of its tread.

"Inner" means toward the inside of the tire and "outer" means toward its exterior.

"Lateral edge" means the axially outermost edge of the tread as defined by a plane parallel to the equatorial plane and intersecting the outer ends of the axially outermost traction lugs at the radial height of the inner tread surface.

"Radial" and "radially" mean directions radially toward or away from the axis of rotation of the tire.

"Shoulder" means the upper portion of sidewall just below the tread edge. Tread shoulder or shoulder rib means that portion of the tread near the shoulder.

### Brief Description of the Drawings

The invention will be described by way of example and with reference to the accompanying drawings in which:
FIG. 1 is a schematic perspective view of a tire for use with a structure in accordance with the present invention.
FIG. 2 is a schematic sectional view of the tire of FIG. 1.
FIG. 3 is a schematic detail view of part of the tire of FIG. 1 with the structure under a first condition.
FIG. 4 is a schematic detail view of part of the tire of FIG. 1 with the structure under a second condition.
FIG. 5 is a schematic exploded view of the structure of FIGS. 3 and 4.

### Detailed Description of an Example Embodiment of the Present Invention

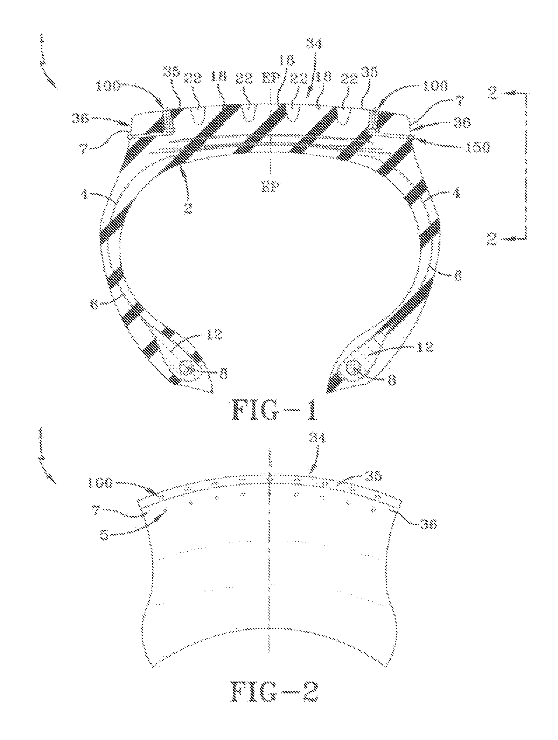

FIG. 1 shows a cross-section of an example tire 1 for use with the present invention. The tire 1 comprises a torus-shaped carcass 2, of the radial or of the cross-ply type, comprising a resistant structure which is formed by at least a rubberized fabric ply 4 reinforced with textile or metal cords and having turnup ends 6 each fixed to a pair of circumferentially unextendable, preferably metallic, annular core, known and referred to hereinbelow as reinforcing bead cores 8. The bead cores 8 are provided with rubber filling apexes 12. The zone of the example tire 1 comprising the bead core 8 and filling apex 12 forms the bead, intended for fixing the tire 1 to a corresponding mounting rim (not shown).

The carcass 2 has arranged on it, in a known manner, a tread band 34 which is intended for the rolling contact of the example tire1 on the ground and is provided with a raised pattern comprising grooves 22 formed in the thickness of the tread band 34 and define a plurality of blocks and/or ribs 18. The combination of these structural elements, in various configurations, produces different tread patterns which are generally optimized for different applications of the example tire 1.

Together with the carcass 2 of the example tire 1, a belt structure is arranged on the crown of carcass, in between the carcass ply 4 and the tread band 34, axially extending from one side to the other of the example tire, i.e. as wide as the tread band 34. The belt structure 26 may include at least two rubberized fabric strips, radially superimposed with textile and/or metallic reinforcing cords parallel to one another in each strip, mutually intersecting with those of the adjacent strip and with respect to the equatorial plane EP of the example tire. The belt structure may also include a radially outermost strip with textile and/or metallic reinforcing cords, oriented at substantially 0 degrees or +/- 5 degrees relative to a circumferential direction of the example tire 1.

The thickness of the tread band 34 may be between 8 mm and 24 mm, and more specifically, between 12 mm and 16 mm for passenger tires, between 8 mm and 11 mm for light truck tires, and between 18 mm and 24 mm for medium truck tires. The tread band 34 may be constructed of a compound generally suitable for winter usage, and specifically suited for winter usage with studs. The tread band 34 may have, inserted in it, a plurality of structures 100 in accordance with the present invention.

The structures 100 may provide anti-slip elements for enhanced snow and ice traction. The structures 100 may be received in recesses 3 that secure the structures within the tread band 34. An air channel 5 extends axially from the radially innermost portion of the recess 3 to the outer surface 7 of the lateral side 36 of the tread band 34.

Each structure 100 includes a housing 110, stud portion 130 slidingly secured within the housing, and a sealing element 150 for maintaining air pressure within the air channel 5. The housing 110 has a cylindrical configuration with a central channel 112 for receiving part of the stud portion 130, a cylindrical flange 114 for securing the housing against radially outward movement, and a spring biasing element 116 for biasing part of the stud portion radially inward. The spring biasing element 116 may be constructed of any suitable resilient material, such as rubber or a thermoplastic, such that the stud portion 130 remains in a retracted position and resists the centripetal forces generated upon rotation of the tire 1.

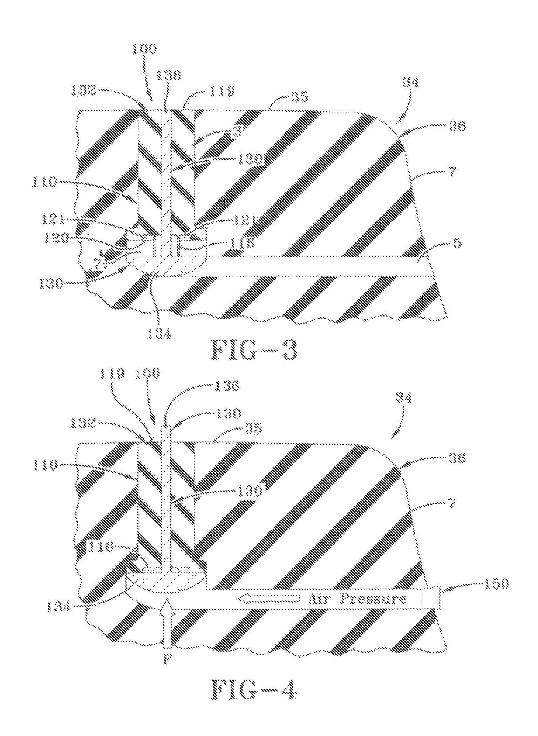

When installed in the tire 1, the housing 110 of each structure 100 is disposed within each recess 3 of the tire 1 with the radially outer surface 118 of the cylindrical flange 114 as displacement restricting element abutting a shoulder portion 7' of the recess (Figs. 3 & 4). Also, when installed, a shaft 132 of the stud portion 130 is slidingly disposed within the central channel 112 of the housing 110 and the shaft extends radially inward to a flange 134 as displacement restricting elements of the stud portion 130 located at the intersection of the radially innermost portion of the recess 3 and the axially innermost portion of the air channel 5. The diameter of the recess 3 may be larger than the diameter of the shaft 132 so that the shaft may still slide with the recess when the tread band 34 compresses under the load of a vehicle.

The housing 110 may be constructed of an elastic material similar to the material of the tread band 34 (i.e., a rubber composition) so as to wear as the radially outer surface 35 of the tread band wears. A radially outer surface 119 of the housing 110 may thereby be continually flush with the outer surface 35 of the tread band 34. The stud portion 130 may be constructed of an elastic material suitably hard to grip/penetrate ice, but suitably soft such that a tip 136 of the shaft 132 wears as the radially outer surface 35 of the tread band 34 wears thereby reducing noise, improving handling and comfort, extending functional life of the tire, avoiding road damage (such as damage caused by conventional steel studs). The tip 136 of the shaft 132 may thereby be continually flush with the outer surface 35 of the tread band 34 and the outer surface 119 of the housing 110 when the shaft is in an unextended position (Fig. 3), as described below. The spring biasing element 116 may or may not be constructed of the same material as the housing 110. The housing 110 may alternatively be constructed of an inelastic material with suitable strength and wear properties.

The spring biasing element 116 may or may not be integral to the housing 110. The spring biasing element 116 may or may not be a complete cylinder circumscribing the shaft 132 of the stud portion 130 or a cylindrical array of projections extending from a radially inner surface 120 of the housing 110. The housing 110 may have a recess 121 disposed at the radially inner surface 120 of the housing 110 for accommodating the spring biasing element 116 in a compressed position (Fig. 4).

During normal, non-winter, non-icy conditions, when ice traction is unneeded, the shaft 132 of the stud portion 130 may be in an unextended position (Fig. 3) with the tip 136 of the shaft 132 flush with the radially outer surface 119 of the housing 110 and the radially outer surface 35 of the tread band 34. When ice traction is needed, a predetermined air pressure (i.e. 2 bar or more than 2 bar such as 2.5 bar) may be introduced in a suitable manner into the air channel 5. The predetermined air pressure acts on the underside of the flange 134 of the stud portion 130, thereby moving the upper side of the flange radially outward against the spring biasing element 116 of the housing 110. The spring biasing element 116 compresses and allows the flange 134, and thereby the tip 136 of the shaft 132, to move radially outward relative to the housing 110 and the tread band 34. The tip 136 of the shaft 132 may thus extend radially outward beyond the radially outer surface 35 of the tread band 34 and may provide ice traction in a manner similar to conventional studs. The usage of the tip 136 of the structure 100 is thereby occasional, not continual.

When ice traction is no longer needed, the predetermined air pressure may be released from the air channel 5. The spring biasing element 116 may thereby move the flange 134 radially inward and retract the tip 136 of the shaft 132 until ice traction is once more needed. A plug 150 for sealing the air channel 5 is shown at the axially outer portion of the air channel (Fig. 4), but any suitable mechanism may be utilized to selectively seal the predetermined air pressure within the air channel.

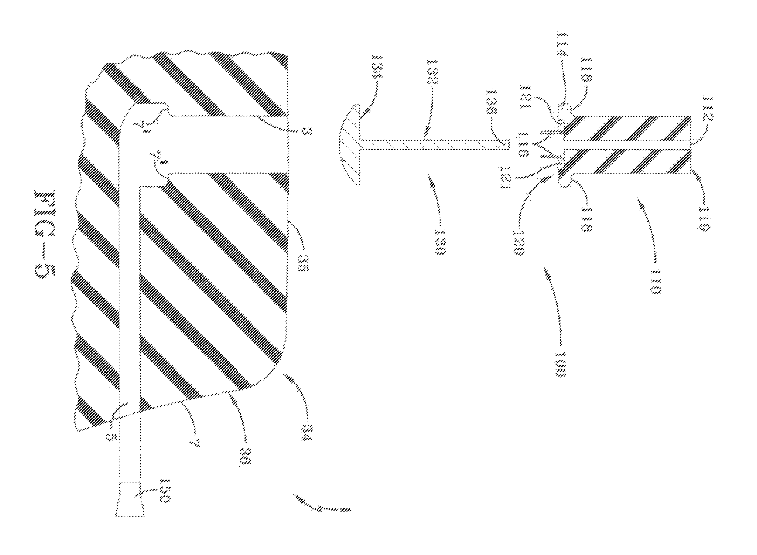

One example structure 100 may have a flange 114 of a housing 110 with a diameter of 10.0 mm and a shaft 132 of a stud portion 130 with a diameter of 1.2 mm. The source of the predetermined air pressure may be the tires pressure itself or an external source. As shown in Fig. 5, the structure 100 may be inserted into the recess 3 of the tire 1 with the flanges 114, 134 of the housing 110 and stud portion 130 compressing in the radially outer, relatively narrow portion of the recess and expanding to there original shape when the flanges reach the radially inner, relatively wide portion of the recess. As shown in Fig. 2, the tire 1 may have a plurality of structures 100 as is deemed suitable for ice traction, when required.

## Claims

1. A tire comprising a tread (34) having a radially outer tread surface (35) and a plurality of radially extending recesses (3) and an anti-slip structure (100) disposed in at least one of the radially extending recesses (3); the anti-slip structure (100) comprising a housing (110) with a displacement restricting element (114) and a channel (112) and a stud portion (130) comprising a shaft (132) and a displacement restricting element (134), the shaft (132) being slidingly disposed within the channel (112) such that a radially outer tip (136) or end of the shaft (132) may selectably extend radially outward from the housing (110) and from the radially outer tread surface (35), the radially outer tip (136) or end extending from the housing (110) and from the radially outer tread surface (35) when a predetermined air pressure is introduced into the radially extending recess (3) thereby forcing the displacement restricting element (114) of the stud portion (130) radially outward.

2. The tire of claim 1 wherein the displacement restricting element (114) of the housing (110) is a flange (114) and/or wherein the displacement restricting element (134) of the stud portion (130) is a flange (134).

3. The tire of claim 1 or 2 wherein the predetermined air pressure introduced into the radially extending recess (3) forces the flange (134) or the displacement restricting element (134) of the stud portion (130) radially outward to abut the flange (114) or the displacement restricting element (114) of the housing (110).

4. The tire of at least one of the previous claims wherein the housing (110) is a cylindrical housing, and/or wherein the channel (112) is a central channel.

5. The tire of at least one of the previous claims wherein the flange (114) of the housing (110) is a cylindrical flange (114).

6. The tire of at least one of the previous claims wherein the radially outer tip (136) or end of the shaft (132) may selectably extend radially outward from the housing (110) and from the radially outer tread surface (35) in order to enhance traction of the tire.

7. The tire as set forth in at least one of the previous claims wherein the housing (110) of the anti-slip structure (100) further includes a radially inner surface (120), an opposite radially outer surface (119), and a biasing element (116), the biasing element (116) extending preferably radially inward from the radially inner surface (120), the biasing element (116) maintaining the radially outer tip (136) or end of the stud portion (130) in an unextended or not fully extended position when air pressure in the radially extending recess (3) is less than the predetermined air pressure.

8. The tire as set forth in at least one of the previous claims wherein the predetermined air pressure can be introduced into the radially extending recess (3) by an axially extending channel (5).

9. The tire as set forth in claim 8 wherein the axially extending channel (5) interconnects a radially innermost portion of the radially extending recess (3) and an axially outer side portion (7) of the tread (34).

10. The tire as set forth in at least one of the previous claims wherein the housing (110) of the anti-slip structure (100) further includes a radially inner surface (120), an opposite radially outer surface (119), and a biasing element (116), the biasing element (116) preferably extending radially inward from the radially inner surface (120), the biasing element (116) compressing into a recess at the radially inner surface (120) when the predetermined air pressure is present in the radially extending recess (3).

11. The tire as set forth in at least one of the previous claims wherein the radially outer tip (136) or end of the stud portion (130) is flush or substantially flush with an outer surface of the housing (110) and the radially outer tread surface (35) when air pressure in the radially extending recess (3) is less than the predetermined air pressure.

12. The tire as set forth in at least one of the previous claims wherein the plurality of radially extending recesses (3) each have a shoulder portion (7') for limiting radially outer movement of the flange (114) or the displacement restricting element (114) of the housing (110).

13. The tire as set forth in at least one of the previous claims wherein the displacement restricting element (114) or the flange (114) of the housing (110) limits radially outer movement of the displacement restricting element (134) or flange (134) of the stud portion (130).

14. The tire as set forth in at least one of the previous claims wherein a sealing element seals the predetermined air pressure within the radially extending recess (3).

15. The tire as set forth in at least one of the previous claims wherein the tire is a pneumatic tire (1) and the predetermined air pressure is supplied by an inflation pressure of the pneumatic tire (1).
